# DEMANDE DE BREVET EUROPEEN

(11) **EP 1 168 879 A1**
(43) Date de publication de la demande: **02.01.2002**
(21) Numéro de dépôt: 01401643.0
(22) Date de dépôt: 21.06.2001
(51) Int. Cl.: H04Q 7/38, H04Q 7/32

(54) **Procédé de gestion du fonctionnement d'un terminal mobile de réseau de télécommunication en fonction de la position géographique de ce terminal**

(30) Priorité: 30.06.2000 FR 0008494
(71) Demandeur: ALCATEL, 75008 Paris (FR)
(72) Inventeur: Sykes, Francis, 75014 Paris (FR); Hartmann, Anne-Marie, 78420 Carrieres sur Seine (FR)
(74) Mandataire: Laroche, Danièle

(57) **Abrégé**

Le réseau est divisé en cellules correspondant chacune à la couverture d'une station de base destinée à échanger des données avec le terminal mobile. La position du terminal est définie en permanence pendant son fonctionnement par des données de localisation qui sont fonction d'au moins une station de base. Le procédé est du type dans lequel on définit au moins deux zones géographiques distinctes et au moins une particularité de fonctionnement du terminal propre à chaque zone. Chaque zone est définie par des données de localisation qui sont fonction d'un ensemble d'au moins une station de base contenue dans la zone. On enregistre dans une mémoire du terminal les données de localisation des zones et les particularités de fonctionnement propres à ces zones. On compare les données de localisation du terminal mobile aux données de localisation des zones pour déduire dans quelle zone est localisé le terminal. On applique la particularité de fonctionnement spécifique à une zone dès que le terminal est localisé dans cette zone.

## Description

La présente invention concerne un procédé de gestion du fonctionnement d'un terminal mobile de réseau de télécommunication en fonction de la position géographique de ce terminal.

On connaît déjà dans l'état de la technique, notamment d'après le document US-A-5 568 153, un procédé de gestion du fonctionnement d'un terminal mobile de réseau de télécommunication en fonction de la position géographique de ce terminal, le réseau étant divisé en cellules géographiques correspondant chacune à la couverture d'une station de base destinée à échanger des données avec le terminal mobile en fonctionnement par voie hertzienne, la position de ce terminal mobile étant définie en permanence pendant son fonctionnement par des données de localisation qui sont fonction d'au moins une station de base de la cellule dans laquelle est situé le terminal, le procédé étant du type dans lequel on définit au moins deux zones géographiques distinctes et au moins une particularité de fonctionnement du terminal propre à chaque zone.

De façon classique, un réseau cellulaire de télécommunication de type GSM (Global System for Mobile Communications) comprend un sous-système radio (BSS : Base Station Subsystem) et un sous-système réseau (NSS : Network Subsystem).

Le sous-système radio est destiné à gérer les échanges de données avec les terminaux mobiles par voie hertzienne et comprend à cet effet des stations de base (BTS : Base Transceiver Station) et des contrôleurs de stations de base (BSC : Base Station Controler ).

Le sous-système réseau est destiné à gérer les appels en tenant compte de la mobilité des terminaux et comprend à cet effet des bases de données et des commutateurs de réseau cellulaire (MSC : Mobile Switching Center).

Les bases de données comprennent essentiellement, d'une part, le registre de localisation nominal (HLR : Home Location Register) contenant notamment des données relatives aux abonnements des utilisateurs (services prévus par les abonnements, autorisation d'appel international, etc.) et des données de localisation grossière des abonnés, et d'autre part, le registre de localisation visiteur (VLR : Visitor Location Register) contenant notamment des données relatives aux abonnés présents dans une certaine zone et des données de localisation précise des abonnés.

Selon le procédé décrit dans le document US-A-5 568 153, on définit deux zones géographiques, à savoir une zone domestique et une zone complémentaire de la précédente dite zone extérieure. La zone domestique est définie à partir des coordonnées d'un emplacement domestique situé au centre de cette zone domestique. Les coordonnées de l'emplacement domestique sont enregistrées dans un élément du sous-système réseau, à savoir la base de données HLR.

Dans le document US-A-5 568 153, les particularités de fonctionnement d'un terminal propres à chaque zone sont des services spécifiques à ces zones, tels que l'application d'une grille de tarifs spécifiques, définis par des paramètres enregistrés dans la base de données HLR. Selon le procédé décrit dans le document US-A-5 568 153, un service n'est mis en oeuvre qu'après avoir été invoqué. Ainsi, lorsqu'un service spécifique à une zone est invoqué, le procédé détermine si le terminal mobile est situé dans cette zone puis, le cas échéant, règle les paramètres du service en conséquence.

Le procédé décrit dans le document US-A-5 568 153 a pour inconvénient d'augmenter la charge du réseau de télécommunication avec les données de localisation des zones domestique et complémentaire, plus particulièrement d'augmenter la charge de la base de données HLR du sous- système réseau dans laquelle sont stockées ces données de localisation. Par ailleurs, un service spécifique à une zone n'est activé que lorsqu'il est invoqué explicitement, ce qui, d'une part, accroît la consommation du terminal qui doit se signaler au réseau, et d'autre part monopolise des ressources radio.

L'invention a notamment pour but de proposer un procédé du type précité dans lequel la mémorisation des données de localisation des différentes zones géographiques n'entraîne pas une charge supplémentaire du réseau de télécommunication, la mise en oeuvre d'une particularité de fonctionnement du terminal propre à une zone pouvant se faire de façon automatique, dès que ce terminal accède à la zone.

A cet effet, l'invention a pour objet un procédé du type décrit dans le document US - A - 5 568 153, caractérisé en ce que :
on définit géographiquement chaque zone par des données de localisation qui sont fonction d'un ensemble d'au moins une station de base contenue dans la zone,
on enregistre dans une mémoire du terminal les données de localisation des zones et les particularités de fonctionnement propres à ces zones,
on compare les données de localisation du terminal aux données de localisation des zones pour déduire dans quelle zone est localisé le terminal,
on applique la particularité de fonctionnement spécifique à une zone dès que le terminal est localisé dans cette zone.

Suivant d'autres caractéristiques de ce procédé:
- au moins une zone est définie par des données de localisation qui sont fonction d'une station de base de référence et d'au moins une autre station de base située dans l'environnement de la station de référence ;
- les données de localisation des zones et les particularités de fonctionnement propres à ces zones sont saisies directement sur le terminal mobile ou un moyen de saisie raccordé par voie filaire à ce terminal ;
- les données de localisation des zones et les particularités de fonctionnement propres à ces zones sont saisies sur un moyen de saisie séparé du terminal mobile, les données saisies étant renvoyées vers le terminal mobile par voie électromagnétique ;
- les données saisies sont renvoyées vers le terminal mobile (22) par voie hertzienne via le réseau de télécommunication (10) ;
- les particularités de fonctionnement du terminal mobile concernent le réglage d'un paramètre de fonctionnement du terminal mobile en fonction de la localisation de celui-ci, tel que l'activation ou la désactivation d'une sonnerie ou d'un renvoi d'appel, le réglage de l'heure locale, etc., et/ou le déclenchement d'un événement en fonction d'un changement de localisation du terminal mobile, tel que le déclenchement d'une sonnerie d'avertissement ;
- il existe au moins une zone contenant plus d'une station de base ;
- il existe au moins une zone à laquelle sont associées plusieurs particularités de fonctionnement du terminal mobile propres à cette zone ;
- il existe plus de deux zones à chacune desquelles est associée au moins une particularité de fonctionnement du terminal mobile propre à cette zone ;
- on enregistre également dans une mémoire du terminal mobile des données de référence et des particularités de fonctionnement du terminal mobile correspondant à ces données de référence, on compare les données émises vers le terminal mobile, par la station de base de la cellule dans laquelle est situé ce terminal mobile, avec les données de référence enregistrées, on applique la particularité de fonctionnement du terminal mobile correspondant à des données de référence enregistrées dès que ces données de références correspondent à celles émises par la station de base de la cellule dans laquelle est situé le terminal mobile ;
- une des particularités de fonctionnement du terminal mobile concerne l'interdiction de modification par un utilisateur des données enregistrées dans la mémoire du terminal mobile.

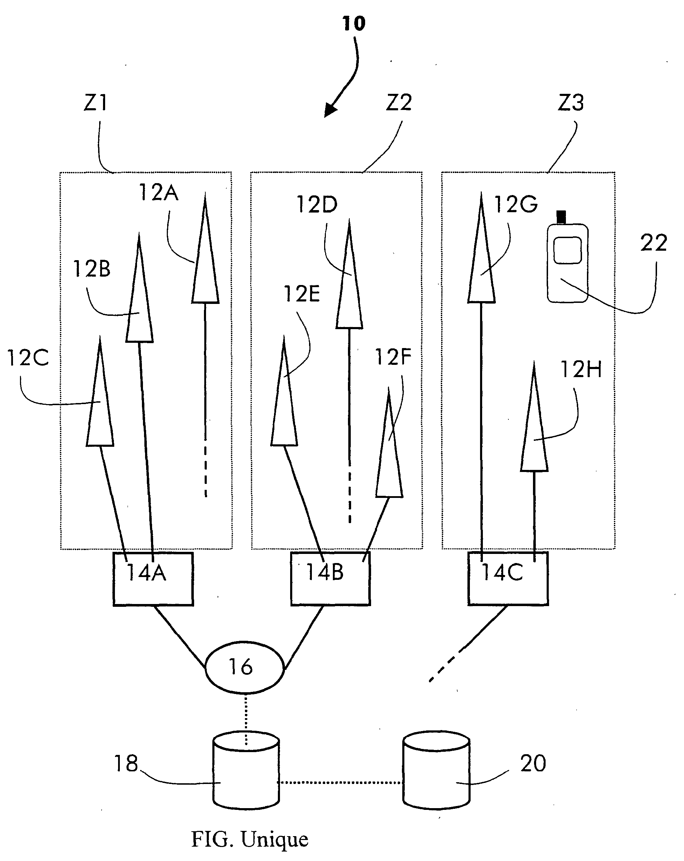

L'invention sera mieux comprise à la lecture de la description qui va suivre, donnée uniquement à titre d'exemple et faite en se référant aux dessins annexés dans lesquels la figure unique est une vue schématique d'un réseau de télécommunication dans lequel est mis en oeuvre le procédé selon l'invention.

On a représenté sur la figure unique un réseau cellulaire de télécommunication classique, par exemple selon la norme GSM, désigné par la référence générale 10.

Le réseau de télécommunication 10 comprend un sous système radio comportant notamment des stations de base (BTS) 12A à 12H reliées à des contrôleurs de station de base (BSC) 14A à 14C par exemple par une architecture en étoile.

Le réseau de télécommunication 10 comprend également un sous système réseau comportant notamment des commutateurs de réseau cellulaire (MSC) 16. Chacun des commutateurs de réseau cellulaire est couplé à une base de donnée formant registre de localisation visiteur 18 (VLR) échangeant des données avec au moins une base de donnée formant registre de localisation nominal 20 (HLR).

On a également représenté sur la figure unique un terminal mobile 22 dont le fonctionnement est géré par le procédé selon l'invention en fonction de la position géographique de ce terminal 22. Le terminal mobile 22 est destiné à échanger des données avec les stations de base 12A à 12H par voie hertzienne, de façon connue en soi.

Le réseau de télécommunication 10 est divisé en cellules géographiques correspondant chacune sensiblement à la couverture d'une station de base 12A à 12H. On notera que certains points d'une cellule, en particulier les points proches des limites de cette cellule, peuvent être communs à plusieurs cellules.

Conformément au fonctionnement classique du réseau cellulaire, le terminal mobile 22 en fonctionnement identifie en permanence les stations de base 12A à 12H environnantes (et donc les cellules environnantes correspondantes). De façon classique, la position du terminal mobile 22 est définie en permanence pendant son fonctionnement par des données de localisation qui sont fonction d'au moins une station de base 12A à 12H, notamment de la station de base 12A à 12H de la cellule dans laquelle est situé ce terminal mobile 22.

On notera toutefois que la position précise du terminal mobile n'est habituellement pas communiquée au réseau. En effet, l'opérateur exploitant le réseau définit généralement des zones de localisation du terminal mobile qui sont propres à cet opérateur. Chaque zone de localisation est définie par un ensemble de stations de base émettant un code de localisation identique. Lorsque le terminal mobile change de zone de localisation, le réseau en est informé par un échange d'informations entre ce réseau et le terminal mobile déclenché par le changement de code de localisation reçu par le terminal. L'opérateur peut ainsi localiser le terminal mobile avec une précision qui dépend de la taille des zones de localisation, c'est-à-dire du nombre de stations de base qu'elles contiennent.

Pour gérer le fonctionnement du terminal mobile 22 en fonction de sa position, on définit au moins deux zones géographiques distinctes et au moins une particularité de fonctionnement du terminal mobile 22 propre à chaque zone. Ainsi, sur la figure unique, on a schématisé trois zones géographiques Z1, Z2 et Z3 regroupant chacune plusieurs stations de base 12A à 12H.

Selon le procédé de l'invention, on définit géographiquement chaque zone Z1 à Z3 par des données de localisation qui sont fonction d'un ensemble d'au moins une station de base 12A à 12H contenue dans la zone Z1 à Z3.

Puis, on enregistre dans une mémoire du terminal mobile 22 les données de localisation des zones Z1 à Z3 et les particularités de fonctionnement propres à ces zones Z1 à Z3, par exemple sous la forme d'une table telle que celle-ci :

| ZONE | DEFINITION GEOGRAPHIQUE DE LA ZONE | PARTICULARITES DE FONCTIONNEMENT |
|---|---|---|
| Z1 | En fonction de 12A, 12B, 12C | - sonnerie réveil activée - etc. |
| Z2 | En fonction de 12D, 12E, 12F | - renvoi d'appel vers messagerie - etc. |
| Z3 | En fonction de 12G, 12H | - affichage message - etc. |

De préférence, les zones Z1 à Z3 et les particularités de fonctionnement propres à ces zones Z1 à Z3 sont définies par des paramètres saisis par l'utilisateur. Ces paramètres peuvent être saisis à partir d'une interface classique, par exemple un clavier et un écran du terminal mobile 22 ou un ordinateur connecté temporairement par voie filaire au terminal mobile 22. Ces paramètres peuvent être également saisis à partir d'un navigateur internet utilisant un mode de transmission de données adapté à la téléphonie mobile tel que le WAP (Wireless Application Protocol). Ainsi, l'opérateur exploitant le réseau (ou un fournisseur de service) peut récupérer les paramètres que l'utilisateur a saisis sur un site internet approprié, les traduire le cas échéant en données de localisation relatives aux stations de base (12A à 12H) directement exploitables par un algorithme programmé dans le terminal mobile 22, puis les envoyer vers le terminal mobile de cet utilisateur par exemple à l'occasion d'un changement de zone de localisation détecté par le réseau.

Ainsi, les données de localisation des zones Z1 à Z3 et les particularités de fonctionnement propres à ces zones Z1 à Z3 peuvent être saisies directement sur le terminal mobile 22 ou un moyen de saisie raccordé par voie filaire à ce terminal 22. Les données de localisation des zones Z1 à Z3 et les particularités de fonctionnement propres à ces zones Z1 à Z3 peuvent également être saisies par un moyen séparé du terminal mobile 22. Dans ce cas, les données saisies sont renvoyées vers le terminal mobile 22 par voie par voie électromagnétique, par exemple par voie hertzienne via le réseau de télécommunication 10.

On notera que l'invention permet aussi bien à l'utilisateur qu'à l'opérateur exploitant le réseau de modifier les données enregistrées dans le terminal mobile.

L'utilisateur peut par exemple définir une zone « domicile », une zone « travail », une zone « rendez-vous », une zone « lieu public », etc. ainsi que des profils de fonctionnement du terminal mobile 22 propres à ces zones. Une zone peut relever notamment de données personnelles et permanentes, c'est le cas par exemple de la zone « domicile » ou « travail », de données personnelles et provisoires, c'est le cas par exemple de la zone « rendez-vous » ou encore de données impersonnelles (permanentes ou provisoires), c'est le cas par exemple de la zone « lieu public ».

Les particularités de fonctionnement du terminal mobile 22 peuvent concerner le réglage d'un paramètre de fonctionnement de ce terminal mobile 22 en fonction de la localisation de celui-ci, tel que l'activation ou la désactivation d'une sonnerie ou d'un renvoi d'appel, le réglage de l'heure locale, etc.

Les particularités de fonctionnement du terminal mobile 22 peuvent également concerner le déclenchement d'un événement en fonction d'un changement de localisation de ce terminal mobile 22, tel que le déclenchement d'une sonnerie d'avertissement.

Lorsque le terminal mobile 22 est en fonctionnement, sa position est définie en permanence par des données de localisation qui sont fonction d'au moins une station de base 12A à 12H, notamment de la station de base 12A à 12H de la cellule dans laquelle est situé le terminal mobile 22. Ces données de localisation du terminal mobile 22 sont généralement fournies par le réseau de télécommunication 10. Toutefois, la localisation du terminal mobile 22 peut être réalisée le cas échéant par un système externe au réseau de télécommunication définissant la position de ce terminal mobile 22 par des données de localisation exprimées indépendamment des stations de base, par exemple par des coordonnées telles que celles fournies par un système GPS (Global Positioning System). Dans ce cas, les données de localisation du terminal mobile 22 exprimées indépendamment des stations de base seront automatiquement converties, par une interface avec le réseau de télécommunication 10, en données de localisation qui sont fonction d'au moins une station de base 12A à 12H.

Les données de localisation du terminal mobile 22 exprimées en fonction d'au moins une station de base 12A à 12H sont comparées en permanence dans le terminal aux données de localisation des zones Z1 à Z3 mémorisées dans le terminal mobile 22 pour déduire dans quelle zone Z1 à Z3 est localisé ce terminal 22.

On notera que, de façon classique, lorsque le terminal mobile 22 est dans une cellule il peut échanger des données avec la station de base de cette cellule, dite « station de référence », ainsi qu'avec d'autres stations de base environnantes dites « stations visibles ».

Ainsi, selon un mode de réalisation non illustré, il est possible de définir une zone Z1 à Z3 relativement précisément par des données de localisation qui sont fonction d'une station de base (12A à 12H) de référence et, le cas échéant, d'au moins une autre station de base située dans l'environnement de la station de base de référence.

A titre d'exemple une zone Zn peut être définie comme étant la zone ayant pour station de base de référence la station 12n et comme stations visibles les stations 12n+1, 12n+2 et 12n+3, le niveau de champ (ou encore tout autre paramètre tel que l'avance de phase) de la station 12n+1 étant au moins le double de celui de la station 12n+3.

Une zone Zn ainsi définie peut être plus petite que la cellule contenant la station de base de référence, égale à cette cellule ou supérieur à cette cellule.

Dès que la zone Z1 à Z3 dans laquelle est localisé le terminal mobile 22 est identifiée (dans l'exemple illustré le terminal mobile 22 est dans la zone Z3), la particularité de fonctionnement spécifique à cette zone Z1 à Z3 est automatiquement appliquée.

Le procédé selon l'invention permet notamment de faire fonctionner le terminal mobile 22 selon l'exemple de scénario suivant.

L'utilisateur quitte la zone « domicile » et, approchant de son lieu de travail, atteint la zone « travail ». Les particularités de fonctionnement propres à la zone « travail » sont activées dès que l'utilisateur portant le terminal mobile 22 pénètre dans celle-ci. Une telle particularité peut prévoir par exemple le renvoi automatique d'appels personnels vers une messagerie vocale. De retour vers son domicile, l'utilisateur traversant la zone « rendez-vous » est automatiquement averti par une sonnerie (particularité de fonctionnement propre à la zone « rendez-vous ») par exemple d'une course à faire chez un commerçant.

On notera que le procédé selon l'invention permet de définir plus de deux zones à chacune desquelles peuvent être associées plusieurs particularités de fonctionnement du terminal mobile 22. Par ailleurs, chaque zone regroupe généralement plus d'une station de base 12A à 12H, mais il est possible le cas échéant de limiter une zone à une seule station de base 12A à 12H, cette zone pouvant être plus petite qu'une cellule comportant cette station de base comme évoqué précédemment.

Parmi les avantages de l'invention, on notera en particulier que celle-ci prévoit le stockage des données de localisation des différentes zones géographiques dans une mémoire du terminal mobile ce qui évite de charger les bases de données du réseau de télécommunication.

Par ailleurs, la mise en oeuvre d'une particularité de fonctionnement du terminal mobile propre à une zone se fait de façon automatique, dès l'arrivée de ce terminal dans la zone.

De plus, l'invention permet de déclencher un événement sur le terminal mobile en fonction d'un paramètre spatial (la localisation du terminal mobile) et non pas simplement en fonction d'un paramètre temporel comme cela est généralement le cas dans l'état de la technique. On peut aussi bien régler la localisation d'une zone géographique que la dimension de cette zone.

Par ailleurs, il est possible de conditionner une particularité de fonctionnement du terminal mobile avec la réception par ce terminal mobile de données appropriées diffusées par la station de base de la cellule dans laquelle est localisé le terminal, c'est-à-dire émises en permanence vers tous les terminaux mobiles présents dans l'environnement de cette station de base.

A cet effet, des données de référence et des particularités de fonctionnement du terminal mobile 22 correspondant à ces données de référence sont enregistrées dans une mémoire du terminal mobile 22.

En fonctionnement, les données émises vers le terminal mobile 22, par la station de base 12A à 12H de la cellule dans laquelle est situé ce terminal mobile 22, sont comparées dans le terminal avec les données de référence enregistrées.

Toute particularité de fonctionnement du terminal mobile (22) correspondant à des données de référence enregistrées est appliquée dès que ces données de références correspondent à celles émises par la station de base (12A à 12H) de la cellule dans laquelle est situé le terminal mobile (22).

A titre d'exemple, les données de référence peuvent identifier un espace particulier tel qu'un avion ou une salle de concert auquel correspond la particularité de fonctionnement « extinction du portable ».

Ainsi, lorsqu'un utilisateur pénètre dans un espace particulier tel qu'un avion ou une salle de concert, la station de base associée à cet espace émet vers le terminal mobile des données spécifiques. Celles-ci sont comparées dans le terminal avec les données de références enregistrées de façon à provoquer l'extinction du portable conformément à la particularité de fonctionnement enregistrée.

On notera qu'une des particularités de fonctionnement du terminal mobile 22 peut concerner l'interdiction de modification par un utilisateur des données enregistrées dans la mémoire du terminal mobile 22.

## Revendications

1. Procédé de gestion du fonctionnement d'un terminal mobile (22) de réseau (10) de télécommunication en fonction de la position géographique de ce terminal mobile (22),
le réseau (10) étant divisé en cellules géographiques correspondant chacune à la couverture d'une station de base (12A à 12H) destinée à échanger des données avec le terminal mobile (22) par voie hertzienne, la position de ce terminal mobile (22) étant définie en permanence pendant son fonctionnement par des données de localisation qui sont fonction d'au moins une station de base (12A à 12H),
le procédé étant du type dans lequel on définit au moins deux zones (Z1 à Z3) géographiques distinctes et au moins une particularité de fonctionnement du terminal mobile (22) propre à chaque zone (Z1 à Z3),
**caractérisé en ce que**
on définit géographiquement chaque zone (Z1 à Z3) par des données de localisation qui sont fonction d'un ensemble d'au moins une station de base (12A à 12H) contenue dans la zone (Z1 à Z3),
on enregistre dans une mémoire du terminal mobile (22) les données de localisation des zones (Z1 à Z3) et les particularités de fonctionnement propres à ces zones (Z1 à Z3),
on compare les données de localisation du terminal mobile (22) aux données de localisation des zones (Z1 à Z3) pour déduire dans quelle zone (Z1 à Z3) est localisé le terminal mobile (22),
on applique la particularité de fonctionnement spécifique à une zone (Z1 à Z3) dès que le terminal mobile (22) est localisé dans cette zone (Z1 à Z3).

2. Procédé selon la revendication 1, **caractérisé en ce qu'**au moins une zone (Z1 à Z3) est définie par des données de localisation qui sont fonction d'une station de base (12A à 12H) de référence et d'au moins une autre station de base située dans l'environnement de la station de base de référence.

3. Procédé selon la revendication 1 ou 2, **caractérisé en ce que** les données de localisation des zones (Z1 à Z3) et les particularités de fonctionnement propres à ces zones (Z1 à Z3) sont saisies directement sur le terminal mobile (22) ou un moyen de saisie raccordé par voie filaire à ce terminal (22).

4. Procédé selon la revendication 1 ou 2, **caractérisé en ce que**, les données de localisation des zones (Z1 à Z3) et les particularités de fonctionnement propres à ces zones (Z1 à Z3) sont saisies sur un moyen de saisie séparé du terminal mobile (22), les données saisies étant renvoyées vers le terminal mobile (22) par voie électromagnétique.

5. Procédé selon la revendication 4, **caractérisé en ce que** les données saisies sont renvoyées vers le terminal mobile (22) par voie hertzienne via le réseau de télécommunication (10).

6. Procédé selon l'une quelconque des revendications précédentes, **caractérisé en ce que** les particularités de fonctionnement du terminal mobile (22) concernent :
- le réglage d'un paramètre de fonctionnement du terminal mobile (22) en fonction de la localisation de celui-ci, tel que l'activation ou la désactivation d'une sonnerie ou d'un renvoi d'appel, le réglage de l'heure locale, etc., et/ou
- le déclenchement d'un événement en fonction d'un changement de localisation du terminal mobile (22), tel que le déclenchement d'une sonnerie d'avertissement.

7. Procédé selon l'une quelconque des revendications précédentes, **caractérisé en ce qu'**il existe au moins une zone (Z1 à Z3) contenant plus d'une station de base (12A à 12H).

8. Procédé selon l'une quelconque des revendications précédentes, **caractérisé en ce qu'**il existe au moins une zone (Z1 à Z3) à laquelle sont associées plusieurs particularités de fonctionnement du terminal mobile (22) propres à cette zone (Z1 à Z3).

9. Procédé selon l'une quelconque des revendications précédentes, **caractérisé en ce qu'**il existe plus de deux zones (Z1 à Z3) à chacune desquelles est associée au moins une particularité de fonctionnement du terminal mobile (22) propre à cette zone (Z1 à Z3).

10. Procédé selon l'une quelconque des revendications précédentes, **caractérisé en ce que**
on enregistre également dans une mémoire du terminal mobile (22) des données de référence et des particularités de fonctionnement du terminal mobile (22) correspondant à ces données de référence,
on compare les données émises vers le terminal mobile (22), par la station de base (12A à 12H) de la cellule dans laquelle est situé ce terminal mobile (22), avec les données de référence enregistrées,
on applique la particularité de fonctionnement du terminal mobile (22) correspondant à des données de référence enregistrées dès que ces données de références correspondent à celles émises par la station de base (12A à 12H) de la cellule dans laquelle est situé le terminal mobile (22).

11. Procédé selon l'une quelconque des revendications précédentes, **caractérisé en ce qu'**une des particularités de fonctionnement du terminal mobile (22) concerne l'interdiction de modification par un utilisateur des données enregistrées dans la mémoire du terminal mobile (22).
